# EUROPÄISCHE PATENTSCHRIFT

(11) **EP 0 502 316 B1**
(45) Veröffentlichungstag und Bekanntmachung des Hinweises auf die Patenterteilung: **13.12.1995**
(21) Anmeldenummer: 92101595.4
(22) Anmeldetag: 31.01.1992
(51) Int. Cl.: C09D 17/00

(54) **Pigmentpräparationen**
Pigment preparations
Préparations pigmentaires

(30) Priorität: 25.02.1991 DE 4105861
(43) Veröffentlichungstag der Anmeldung: 09.09.1992
(73) Patentinhaber: BASF Aktiengesellschaft, 67063 Ludwigshafen (DE)
(72) Erfinder: Bellaire, Helmut, W-6700 Ludwigshafen (DE)

(56) Entgegenhaltungen:
- US-A- 3 996 059
- DATABASE WPIL, Week 8748, Derwent Publications Ltd., London, GB; AN 87-338598; & JP-A-62 243 667
- DATABASE WPIL, Week 8636, Derwent Publications Ltd., London, GB; AN 86-235265; & JP-A-61 163 977

## Beschreibung

Die vorliegende Erfindung betrifft neue Pigmentpräparationen, enthaltend 20 bis 40 Gew.%, bezogen auf das Gewicht der Präparationen, eines Pigments auf Basis von Ruß, 1 bis 10 Gew.%, bezogen auf das Gewicht der Präparation, eines Dispergiermittels auf Basis eines Umsetzungsprodukts von Polyhydroxystearinsäure mit einem Diamin oder einem Hydroxyalkylamin und 50 bis 79 Gew.%, bezogen auf das Gewicht der Präparation, Olein, sowie deren Verwendung zur Herstellung von Farbbändern.

Die Herstellung und Verwendung von Rußpasten in Farbbandfarben ist bereits eine über viele Jahre bekannte Technologie. Die Anforderungen an den zur Herstellung der Farbbandfarben verwendeten Ruß sind dabei folgende:
- hohe Farbstärke
- geringe Ölaufnahme
- geringe Teilchengröße
- leichte Dispergierbarkeit
- geringe Wasseraufnahme und
- optimales Fließverhalten in Gegenwart von tierischen, pflanzlichen oder mineralischen Ölen.

Da diese Forderungen in der Regel nicht gleichzeitig erfüllt werden können, ist man bestrebt, die jeweiligen Eigenschaften bestmöglich auszuwählen. Oft werden auch öllösliche Farbstoffe, wie C.I. Solvent Orange 3, C.I. Solvent Violet 8, C.I. Solvent Blue 4 oder Solvent Black 5, zur Verstärkung der gewünschten Eigenschaften zugesetzt. Wegen der hohen Lichtstabilität des Rußes, der den Farbbandfarben die erforderliche Dokumentenechtheit gibt, wird man auf Ruß nicht verzichten können; man möchte ihn in höchstmöglicher Konzentration verwenden.

Diesem Wunsch konträr ist das Fließverhalten einer Rußdispersion. Auf Grund der geringen Größe und der Oberflächenbeschaffenheit der Rußteilchen, ist ein hoher spezifischer Ölbedarf vorhanden und es bildet sich in den Anwendungsmedien Strukturviskosität aus, die die Verwendung höherer Rußmengen einschränkt.

Aufgabe der vorliegenden Erfindung war es daher, eine neue hochkonzentrierte Rußpräparation bereitzustellen, die sich vorteilhaft für die Herstellung von Farbbändern eignen sollte.

Demgemäß wurden die eingangs näher bezeichneten Pigmentpräparationen gefunden.

Geeignete Pigmente auf Basis von Ruß sind z.B. handelsübliche Gasruße, Furnaceruße oder Flammruße, wobei die Verwendung von Gasrußen bevorzugt ist.

Besonders geeignet sind Ruße, deren Teilchengröße 0,5 bis 3 »m beträgt.

Der Gehalt an Pigment auf Basis von Ruß in den erfindungsgemäßen Pigmentpräparationen beträgt 20 bis 40 Gew.%, vorzugsweise 25 bis 35 Gew.% und insbesondere 30 bis 33 Gew.%, jeweils bezogen auf das Gewicht der Präparation.

Geeignete Dispergiermittel auf Basis eines Umsetzungsprodukts von Polyhydroxystearinsäure mit einem Diamin oder Hydroxyalkylamin sind an sich bekannt und beispielsweise in der US-A-3 996 059 beschrieben.

Bei der Polyhydroxystearinsäure handelt es sich um einen Polyester, der z.B. dadurch erhalten werden kann, daß man Hydroxystearinsäure, beispielsweise handelsübliche 12-Hydroxystearinsäure oder auch 9- oder 10-Hydroxystearinsäure, in Gegenwart eines inerten organischen Verdünnungsmittels, z.B. Toluol oder Xylol, auf eine Temperatur von 160 bis 200°C erhitzt und das bei der Veresterungsreaktion entstehende Wasser aus dem Reaktionsgemisch entfernt.

Bevorzugt verwendet man Umsetzungsprodukte von solchen Polyhydroxystearinsäuren, die einen Säurewert von 10 bis 150 mg KOH/g, vorzugsweise 20 bis 50 mg KOH/g, aufweisen.

Amine, die zur Umsetzung mit der obengenannten Polyhydroxystearinsäure geeignet sind, gehorchen z.B. der Formel 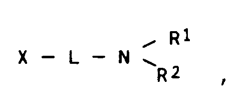
in der L C₂-C₆-Alkylen, das geradkettig oder verzweigt und gegebenenfalls durch Hydroxy substituiert ist, R¹ und R² gleich oder verschieden sind und unabhängig voneinander jeweils Wasserstoff oder C₁-C₂₀-Alkyl und X Hydroxy, Amino oder C₁-C₄-Monoalkylamino bedeuten.

Einzelne Amine sind z.B. 3-Dimethylaminopropylamin, 3-Octadecylaminopropylamin oder 3-Diethylamino-2-hydroxypropanol.

Die Umsetzung von Polyhydroxystearinsäure mit dem Amin kann dadurch erfolgen, daß man die Reaktionsteilnehmer miteinander rührt, und zwar vorzugsweise bei einer Temperatur zwischen 50 und 250°C, wobei die Reaktion vorzugsweise in einer inerten Atmosphäre ausgeführt wird.

Gegebenenfalls kann die Reaktion in einer inerten organischen Flüssigkeit, z.B. Toluol oder Xylol, ausgeführt werden, die anschließend am Ende der Reaktion, beispielsweise durch Destillation, entfernt wird.

Geeignete Dispergiermittel sind weiterhin auch Säureadditionssalze der obengenannte Umsetzungsprodukte oder deren Reaktionsprodukte mit Alkylierungsmitteln, z.B. mit Dimethylsulfat oder Diethylsulfat.

In den erfindungsgemäßen Pigmentpräparationen beträgt der Gehalt an Dispergiermittel 1 bis 10 Gew.%, vorzugsweise 3 bis 10 Gew.% und insbesondere 5 bis 8 Gew.%, jeweils bezogen auf das Gewicht der Präparation.

Die neuen Pigmentpräparationen weisen zudem einen Gehalt an Olein auf, der 50 bis 79 Gew.%, vorzugsweise 60 bis 70 Gew.% und insbesondere 63 bis 67 Gew.%, jeweils bezogen auf das Gewicht der Präparation, beträgt.

Olein im erfindungsgemäßen Sinne bezeichnet technische Ölsäure, wie sie bei der Fettspaltung entsteht. Sie kann noch geringe Mengen an Stearinsäure, Palmitinsäure und anderen Fettsäuren enthalten.

Die erfindungsgemäßen Pigmentpräparationen können zusätzlich noch ca. 10 bis 50 Gew.%, bezogen auf das Gewicht der Präparation, an nicht trocknenden, tierischen oder pflanzlichen Ölen, wie Klauenöl, Knochenöl, Erdnußöl, Rüböl, Spermöl, Rizinusöl, Rapsöl oder Schweineschmalz, enthalten.

Zur Herstellung der neuen Pigmentpräparationen werden Ruß, Dispergiermittel, Olein und gegebenenfalls die nicht trocknenden, tierischen oder pflanzlichen Öle im obengenannten Gewichtsverhältnis vermischt und z.B. in einer Kugelmühle, Perlmühle oder in einem Dreiwalzwerk dispergiert.

Die erfindungsgemäßen Pigmentpräparationen eignen sich in vorteilhafter Weise zur Herstellung von Farbbändern für Matrixdrucker, Schreibmaschinen oder Kettendrucker, wozu sie auf ein Basisgewebe aus Baumwolle, Naturseide oder Polyamid gebracht werden. Die Herstellung von Farbbändern ist beispielsweise in Coating 1972, Seiten 72 und 73 sowie 213 und 214, beschrieben.

Obwohl in den erfindungsgemäßen Pigmentpräparationen der Anteil an Ruß sehr hoch ist, werden mit ihnen bei der Herstellung der Farbbänder die dort üblicherweise auftretenden Probleme vermieden. Diese bestehen in der Regel darin, daß sich die Rußpräparation thixotrop verhält und von den Transportwalzen der Tränkmaschine nicht gefördert wird und so das Band trocken läuft.

Die neuen Pigmentpräparationen dagegen bleiben fließfähig.

Die folgenden Beispiele sollen die Erfindung näher erläutern.

### Beispiel 1

Eine Mischung aus 30 g Gasruß (Spezialschwarz 4 der Firma Degussa), 5 g des in Beispiel 1 der US-A-3 996 059 beschriebenen Dispergiermittels und 65 g Olein wurde in einer Perlmühle gemahlen bis die Teilchengröße des Rußes 1 bis 3 »m betrug.

Die Viskosität der entstehenden Pigmentpräparation betrug 200 mPas. Ihre Thixotropie lag bei 3654 Pa/s.

Die Präparation war für die Herstellung eines Farbbandes gut geeignet.

### Beispiel 2 (Vergleich)

Beispiel 1 wurde wiederholt, jedoch wurde kein Dispergiermittel zugegeben. Viskosität und Thixotropie waren nicht bestimmbar. Die Präparation war für die Herstellung eines Farbbandes ungeeignet.

## Patentansprüche

1. Pigmentpräparationen, enthaltend 20 bis 40 Gew.%, bezogen auf das Gewicht der Präparationen, eines Pigments auf Basis von Ruß, 1 bis 10 Gew.%, bezogen auf das Gewicht der Präparation, eines Dispergiermittels auf Basis eines Umsetzungsprodukts von Polyhydroxystearinsäure mit einem Diamin oder einem Hydroxyalkylamin und 50 bis 79 Gew.%, bezogen auf das Gewicht der Präparation, Olein.

2. Pigmentpräparationen nach Anspruch 1, enthaltend 25 bis 35 Gew.%, bezogen auf das Gewicht der Präparation, eines Pigments auf Basis von Ruß.

3. Verwendung der Pigmentpräparationen gemäß Anspruch 1 zur Herstellung von Farbbändern.

## Claims

1. A pigment preparation containing from 20 to 40 % by weight, based on the weight of the preparation, of a pigment based on carbon black, from 1 to 10 % by weight, based on the weight of the preparation, of a dispersant based on a reaction product of polyhydroxystearic acid with a diamine or hydroxyalkylamine, and from 50 to 79 % by weight, based on the weight of the preparation, of olein.

2. A pigment preparation as claimed in claim 1, containing from 25 to 35 % by weight, based on the weight of the preparation, of a pigment based on carbon black.

3. The use of a pigment preparation as claimed in claim 1 for manufacturing color ribbons.

## Revendications

1. Préparations pigmentaires, contenant 20 à 40% en poids, par rapport au poids de la préparation, d'un pigment à base de noir de carbone, 1 à 10% en poids, par rapport au poids de la préparation, d'un agent dispersant à base d'un produit de réaction d'acide polyhydroxystéarique avec une diamine ou une hydroxyalkylamine, et 50 à 79% en poids, par rapport au poids de la préparation, d'oléine.

2. Préparations pigmentaires selon la revendication 1, contenant 25 à 35% en poids, par rapport au poids de la préparation, d'un pigment à base de noir de carbone.

3. Utilisation des préparations pigmentaires selon la revendication 1 pour la fabrication de rubans encreurs.
